# EUROPEAN PATENT APPLICATION

(11) **EP 4 120 181 A2**
(43) Date of publication of application: **18.01.2023**
(21) Application number: 22204097.4
(22) Date of filing: 27.10.2022
(51) Int. Cl.: G06T 3/40

(54) **METHOD AND APPARATUS OF FUSING IMAGE, AND METHOD OF TRAINING IMAGE FUSION MODEL**

(30) Priority: 29.10.2021 CN 202111279602
(71) Applicant: Beijing Baidu Netcom Science Technology Co., Ltd., Beijing 100085 (CN)
(72) Inventor: Li, Fu, Beijing, 100085 (CN); Lin, Tianwei, Beijing, 100085 (CN)
(74) Representative: Hoffmann Eitle

(57) **Abstract**

The present disclosure provides a method and an apparatus of fusing an image, a method of training an image fusion model, an electronic device, and a storage medium, which relate to a field of artificial intelligence, in particular to fields of computer vision and deep learning technologies. The method of fusing the image (200) includes: encoding (S210) a stitched image obtained by stitching a foreground image and a background image, so as to obtain a feature map; and decoding the feature map to obtain a fused image, wherein the feature map is decoded by: performing (S220) a weighting on the feature map by using an attention mechanism, so as to obtain a weighted feature map; performing (S230) a fusion on the feature map according to feature statistical data of the weighted feature map, so as to obtain a fused feature; and decoding (S240) the fused feature to obtain the fused image.

## Description

### TECHNICAL FIELD

The present disclosure relates to a field of artificial intelligence, in particular to fields of computer vision and deep learning technologies, and more specifically to a method and an apparatus of fusing an image, a method and an apparatus of training an image fusion model, an electronic device, and a storage medium.

### BACKGROUND

With a development of electronic technology, a technology of image fusion has been widely used. For example, in a video production scenario or a video call scenario, in order to improve a user experience, there is often a need to fuse a user image with a predetermined background image. It is desired that the user image and the background image may be more closely matched through the image fusion, so as to give the user an immersive feeling.

### SUMMARY

The present disclosure provides a method and an apparatus of fusing an image, a method and an apparatus of training an image fusion model, an electronic device and a storage medium to improve a fusion effect.

According to an aspect of the present disclosure, a method of fusing an image is provided, including: encoding a stitched image obtained by stitching a foreground image and a background image, so as to obtain a feature map; and decoding the feature map to obtain a fused image, wherein the feature map is decoded by: performing a weighting on the feature map by using an attention mechanism, so as to obtain a weighted feature map; performing a fusion on the feature map according to feature statistical data of the weighted feature map, so as to obtain a fused feature; and decoding the fused feature to obtain the fused image.

According to another aspect of the present disclosure, a method of training an image fusion model is provided, the image fusion model includes an encoding network and a decoding network, and the decoding network includes a weighting sub-network, a fusion sub-network, and a decoding sub-network; the training method includes: inputting a stitched image in an image pair into the encoding network to obtain a feature map, wherein the stitched image is obtained by stitching a foreground image and a background image; decoding the feature map to obtain a predicted fused image, wherein the feature map is decoded by: inputting the feature map into the weighting sub-network to perform a weighting, so as to obtain a weighted feature map; performing a fusion on the feature map by using the fusion sub-network according to feature statistical data of the weighted feature map, so as to obtain a fused feature; and inputting the fused feature into the decoding sub-network to obtain the predicted fused image; and training the image fusion model according to a difference between the predicted fused image and a real fused image in the image pair.

According to another aspect of the present disclosure, an apparatus of fusing an image is provided, including: a first encoding module configured to encode a stitched image obtained by stitching a foreground image and a background image, so as to obtain a feature map; and a first decoding module configured to decode the feature map to obtain a fused image, wherein the first decoding module includes: a first weighting sub-module configured to perform a weighting on the feature map by using an attention mechanism, so as to obtain a weighted feature map; a first fusion sub-module configured to perform a fusion on the feature map according to feature statistical data of the weighted feature map, so as to obtain a fused feature; and a first decoding sub-module configured to decode the fused feature to obtain the fused image.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of fusing the image and/or the method of training the image fusion model provided by the present disclosure.

According to another aspect of the present disclosure, a non-transitory computer-readable storage medium having computer instructions therein is provided, and the computer instructions are configured to cause a computer to implement the method of fusing the image and/or the method of training the image fusion model provided by the present disclosure.

According to another aspect of the present disclosure, a computer program product containing a computer program is provided, and the computer program, when executed by a processor, causes the processor to implement the method of fusing the image and/or the method of training the image fusion model provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, wherein:
FIG. 1 shows a schematic diagram of an application scenario of a method and an apparatus of fusing an image and/or a method and an apparatus of training an image fusion model according to embodiments of the present disclosure;
FIG. 2 shows a flowchart of a method of fusing an image according to embodiments of the present disclosure;
FIG. 3 shows a schematic diagram of a principle of performing a weighting on a feature map by using an attention mechanism according to embodiments of the present disclosure;
FIG. 4 shows a schematic diagram of a principle of fusing a feature map according to embodiments of the present disclosure;
FIG. 5 shows a schematic diagram of a principle of a method of fusing an image according to embodiments of the present disclosure;
FIG. 6 shows a flowchart of a method of training an image fusion model according to embodiments of the present disclosure;
FIG. 7 shows a schematic diagram of a principle of obtaining an image pair as sample data according to embodiments of the present disclosure;
FIG. 8 shows a structural block diagram of an apparatus of fusing an image according to embodiments of the present disclosure;
FIG. 9 shows a structural block diagram of an apparatus of training an image fusion model according to embodiments of the present disclosure; and
FIG. 10 shows a structural block diagram of an electronic device for implementing a method of fusing an image and/or a method of training an image fusion model according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The present disclosure provides a method of fusing an image, which includes an encoding stage and a decoding stage. In the encoding stage, a stitched image obtained by stitching a foreground image and a background image is encoded to obtain a feature map. In the decoding stage, the feature map is decoded to obtain a fused image, and the feature map is decoded by: performing a weighting on the feature map by using an attention mechanism, so as to obtain a weighted feature map; performing a fusion on the feature map according to feature statistical data of the weighted feature map, so as to obtain a fused feature; and decoding the fused feature to obtain the fused image.

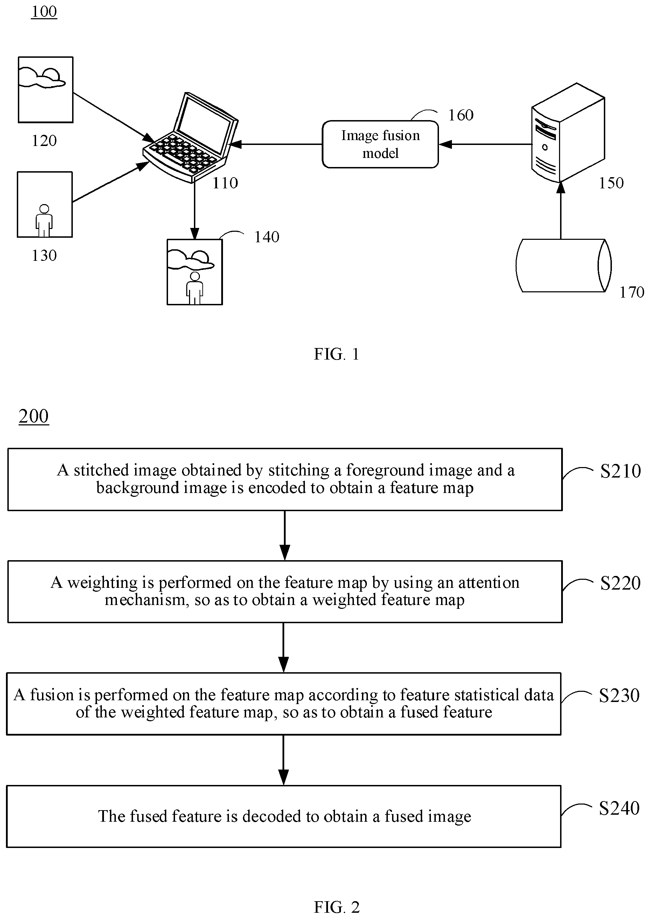

The application scenario of the methods and apparatuses provided by the present disclosure will be described below with reference to FIG. 1.

FIG. 1 shows a schematic diagram of an application scenario of a method and an apparatus of fusing an image and/or a method and an apparatus of training an image fusion model according to embodiments of the present disclosure.

As shown in FIG. 1, an application scenario 100 of such embodiments may include an electronic device 110, which may be any electronic device with a processing function, including but not limited to a smart phone, a tablet computer, a laptop computer, a desktop computer, a servers, or the like.

The electronic device 110 may process, for example, an input image 120 and image 130 to fuse a foreground image in the image 130 with the image 120 as a background, so as to obtain a fused image 130. For example, the electronic device 110 may firstly extract the foreground image from the image 130, and then stitch the foreground image into the image 120 to obtain the stitched image. Then, the stitched image may be processed by a fusion method to weaken a difference of hue between the foreground image and the image 120, so as to obtain a fused image 140.

For example, the electronic device 110 may use an image fusion model to process the stitched image. Specifically, the stitched image may be input into the image fusion model, and the image fusion model may output the fused image 140, so as to achieve an end-to-end fusion of image.

According to embodiments of the present disclosure, as shown in FIG. 1, the application scenario 100 may further include a server 150. The electronic device 110 may be communicatively connected with the server 150 through a network, and the network may include a wireless or wired communication link.

Exemplarily, the server 150 may be used to train the image fusion model, and transmit a trained image fusion model 160 to the electronic device 110 in response to a model acquisition request sent by the electronic device 110, so that the electronic device 110 may fuse the foreground image and background image in the stitched image. In embodiments of the present disclosure, the electronic device 110 may also transmit the stitched image to the server 150 through the network, and the server may process the obtained stitched image according to the trained image fusion model.

According to embodiments of the present disclosure, as shown in FIG. 1, the application scenario 100 may further include a database 170 containing a large number of image pairs, and the image pair includes a stitched image and a fused image. The server 150 may access the database 170 and extract some image pairs from the database 170 to train the image fusion model.

It should be noted that the method of fusing the image provided in the present disclosure may be performed by the electronic device 110 or the server 150. Accordingly, the apparatus of fusing the image provided by the present disclosure may be arranged in the electronic device 110 or the server 150. The method of training the image fusion model provided by the present disclosure may be performed by the server 150 or other servers communicatively connected with the server 150. Accordingly, the apparatus of training the image fusion model provided by the present disclosure may be arranged in the server 150 or other servers communicatively connected with the server 150.

It should be understood that the number and type of electronic device, server and database in FIG. 1 are merely schematic. According to implementation needs, any number and type of terminal devices, servers and databases may be provided.

The method of fusing the image provided by the present disclosure will be described in detail below through FIG. 2 to FIG. 5.

FIG. 2 shows a flowchart of a method of fusing an image according to embodiments of the present disclosure.

As shown in FIG. 2, a method 200 of fusing an image in such embodiments may include operation S210 to operation S240.

In operation S210, a stitched image obtained by stitching a foreground image and a background image is encoded to obtain a feature map.

According to embodiments of the present disclosure, the foreground image may be, for example, an image of a target object extracted from a picture acquired in real time. For example, in a video production scenario or a video call scenario, the foreground image may be a user head portrait. The background image may be any image as a background, such as a sunset image, a beach image, or the like. The stitched image may be obtained by overlaying the foreground image, in a form of a layer, over a target region of the background image.

According to embodiments of the present disclosure, the stitched image may be encoded by using a convolutional network. For example, the stitched image may be input into the convolutional network, and processed by the convolutional network so as to output a feature map. It may be understood that any image feature extraction network may be used to encode the stitched image, which is not limited in the present disclosure.

When the feature map is obtained, the feature map may be decoded by using operation S220 to operation S240, so as to obtain a fused image.

In operation S220, a weighting is performed on the feature map by using an attention mechanism, so as to obtain a weighted feature map.

In operation S230, a fusion is performed on the feature map according to feature statistical data of the weighted feature map, so as to obtain a fused feature.

According to embodiments of the present disclosure, a feature of each feature point in the feature map may be weighted with a predetermined weight, so as to obtain the weighted feature map. For example, in a region where the foreground image of the stitched image is located, it is possible to set a large weight for an edge region and a small weight for a middle region. In this way, when a fusion is performed on the feature map according to the feature statistical data of the weighted feature map, the features of the feature points in the region where the foreground image is located may be gradually closer to the features of the background image in a direction from away from a boundary line between the background image and the foreground image to close to the boundary line, so that the difference of hue between the foreground image and the background image may be weakened.

According to embodiments of the present disclosure, an attention neural network may be provided to learn the weight of each feature point in the feature map through training, and perform a weighting on the feature map according to the learned weight.

According to embodiments of the present disclosure, the feature statistical data of the weighted feature map may include, for example, data such as a feature mean value and/or a feature variance. In operation S230, the feature statistical data may be used to adjust the feature of each feature point in the feature map, so as to perform the fusion on the feature map. The feature mean value may be, for example, a mean value of feature values of feature points in a channel.

For example, the feature of each feature point in the feature map may be adjusted so that a difference between the feature of each feature point in the feature map and the mean value of the features in the feature map is equal to a difference between the feature of each feature point in the weighted feature map and the mean value of the features in the weighted feature map. It may be understood that the method of adjusting the feature map is merely used as an example to facilitate understanding of the present disclosure, which is not limited in the present disclosure.

For example, the feature mean value may also be a mean value of feature values of a plurality of channels included in each feature point in the weighted feature map. In this way, the statistical data may better reflect the feature of each feature point in the weighted feature map, which is conducive to a feature modulation of the feature map based on a feature point-based, so that the fused feature may better retain the feature of each feature point.

In operation S240, the fused feature is decoded to obtain a fused image.

According to embodiments of the present disclosure, a deconvolution network may be used to decode the stitched image. For example, the fused feature may be input into the deconvolution network, and processed by the deconvolution network so as to output the fused image. It may be understood that any image decoding network may be used to decode the fused feature, which is not limited in the present disclosure.

In embodiments of the present disclosure, by performing a weighting on feature map using the attention mechanism and performing a fusion on the feature map according to the feature statistical data of the weighted feature map before decoding the image, different regions of the foreground image may be fused with the background image to different degrees, which is conductive to improving a sense of reality of the fused image. The method of fusing the image may be applied to, for example, a generation scenario of image special effects, or scenario of video record, video call, or the like, and may help improve an interest and a practicality of image processing and improve a user stickiness.

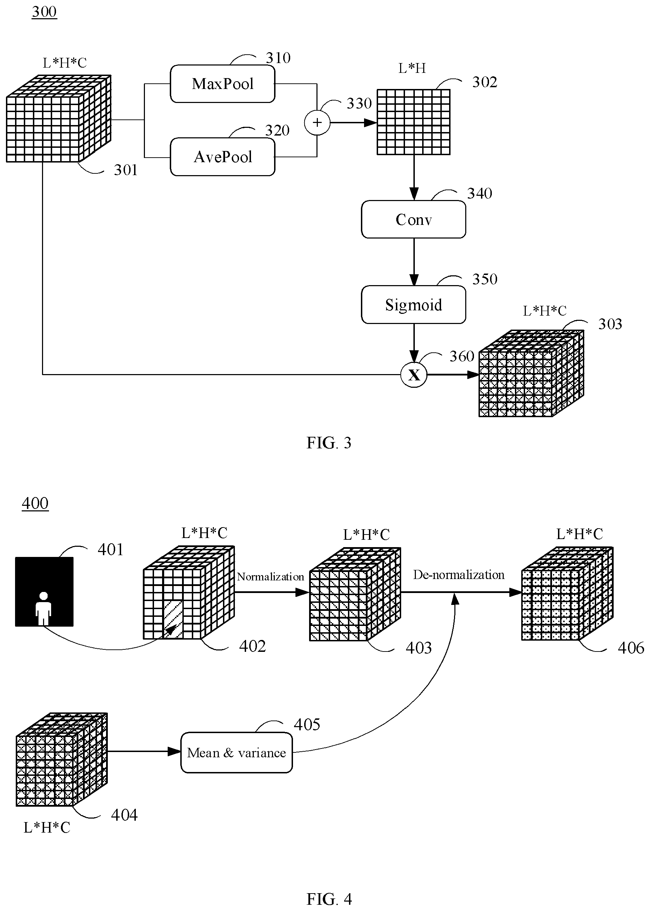

FIG. 3 shows a schematic diagram of a principle of performing a weighting on a feature map by using an attention mechanism according to embodiments of the present disclosure.

According to embodiments of the present disclosure, for example, a spatial attention mechanism may be used to perform a weighting on the feature map. In this way, the attention mechanism may focus on a valid information that needs to be emphatically adjusted in the feature map, so that the weighted feature map may better reflect an adjustment requirement, and a sense of reality of the background image in the fused image may be improved.

Exemplarily, when the attention mechanism is used to perform weighting on the feature map, a feature point-based pooling operation may be performed on the feature map to obtain a pooled feature. Then, a convolution operation is performed on the pooled feature to obtain a weight map for the feature map. Then, a weighting is performed on the feature map by using the weighted map, so as to obtain a weighted feature map.

In embodiments of the present disclosure, the pooling operation may be implemented by using an Average Pooling (AvePool) method, so as to obtain statistical average information. Specifically, it is possible to average features of C channels of each feature point in the feature map to obtain an average value, and the feature of each feature point may be represented by the average value.

In embodiments of the present disclosure, the pooling operation may be implemented by using a Max Pooling (MaxPool) method to obtain a salient feature in the feature map. Specifically, the feature of each feature point may be represented by a largest feature in the features of the C channels of each feature point in the feature map.

In embodiments of the present disclosure, the pooling operation may be implemented by combining the Max Pooling method and the Average Pooling method. Specifically, a feature point-based max pooling operation may be performed on the feature map to obtain a first pooled feature. At the same time, a feature point-based average pooling operation may be performed on the feature map to obtain a second pooled feature. Then, the pooled feature may be obtained according to the first pooled feature and the second pooled feature. For example, a weighted sum of the first pooled feature and the second pooled feature may be determined as the pooled feature. A weight for calculating the weighted sum may be set according to actual requirements, which is not limited in the present disclosure. For example, the first pooled feature and the second pooled feature may be directly added to obtain the pooled feature. In this way, the pooled feature may not only reflect the statistical average information to a certain extent, but also reflect the salient information in the feature map to a certain extent, so that an expression ability of the pooled feature may be improved, and the accuracy of the weight map may be improved.

In embodiments of the present disclosure, the convolution operation of the pooled feature may be performed using a convolutional neural network having a convolution kernel larger than a predetermined size. The predetermined size may be set according to actual requirements. For example, the size of the convolution kernel of the convolutional neural network may be 7^{∗}7 or larger, so that the features after the convolution operation have a larger receptive field and may express more information. However, the size of the convolution kernel may not be too large, so as to ensure a high computational efficiency. A number of the convolutional layers in the convolutional neural network and the size of the convolution kernel in each convolutional layer may be set according to actual needs, which are not limited in the present disclosure.

As shown in FIG. 3, in an embodiment 300, a size of a feature map 301 is set to L^{∗}H^{∗}C, where L represents a length of the feature map 301, H represents a height of the feature map 301, and C represents a number of channels in the feature map 301. By processing the feature map 301 through a max pooling layer MaxPool 310, a first pooled feature may be obtained, and a size of the first pooled feature is L^{∗}H. By processing the feature map 301 through an average pooling layer AvePool 320, a second pooled feature may be obtained, and a size of the second pooled feature is also L^{∗}H. By adding the first pooled feature and the second pooled feature through a fusion layer 330, a pooled feature 302 may be obtained, and a size of the pooled feature 302 is also L^{∗}H.

A convolution operation is performed on the pooled feature 302 through a convolutional neural network Conv 340, and a feature output by the convolutional neural network Conv 340 may be normalized by a Sigmoid layer 350 to obtain a weight map for the feature map. The weight map and the feature map 301 may be dot-multiplied through a fusion layer, so as to obtain a weighted feature map 303. For example, the weight map may be multiplied by feature points with a size of L^{∗}H of each channel of the feature map 301, so as to obtain the weighted feature map 303 with a size of L^{∗}H^{∗}C.

For example, the convolutional neural network Conv 340 may include, for example, two convolutional layers, and the convolution kernel in each convolutional layer may have a size of 7^{∗}7. It may be understood that the structure of the convolutional neural network is merely used as an example to facilitate understanding of the present disclosure, which is not limited in the present disclosure.

According to the principle of performing weighting on the feature map in the above-mentioned embodiments, the attention mechanism may learn which regions in the feature map are more important, which is conducive to improving the accuracy of fusion of the feature map, and improving the sense of reality of the fused image and the user experience.

FIG. 4 shows a schematic diagram of a principle of fusing a feature map according to embodiments of the present disclosure.

According to embodiments of the present disclosure, when fusing the image, for example, a mask image for the foreground image may be referred to, so as to provide a guidance information for the fusion of the feature map to facilitate a feature adjustment of a region that needs a hue adjustment during the fusion process of the feature map, so that a fusion accuracy and a fusion efficiency may be improved to a certain extent.

According to embodiments of the present disclosure, the foreground image and the background image in the stitched image may be fused by merging a color of the background image into the foreground image. When merging the color of the background image into the foreground image, a normalization may be performed on the foreground image firstly to obtain a whitened feature without any color information. Then, a recovery operation may be performed on the whitened feature by using the feature statistical data in the background region.

For example, when considering the mask image, as shown in FIG. 4, an embodiment 400 may be implemented to perform a feature point-based normalization on the feature map 402 according to the mask image 401 for the foreground image, so as to obtain a normalized feature map 403. Then, a de-normalization may be performed on the normalized feature map 403 according to the feature statistical data of each feature point in the weighted feature map, so as to obtain a fused feature 406.

When performing the normalization on the feature map, a region in which the feature needs to be adjusted in the feature map 402 may be determined according to the mask image 401. The region may include, for example, a filled region in the feature map 402 with the size of L^{∗}H^{∗}C. The normalization process may include, for example, firstly mapping the mask image to a size of L^{∗}H, and then dot-multiplying the mapped mask image by the feature with the size of L^{∗}H of each channel in the feature map 402, so as to obtain the feature with a non-zero value in the region that needs to be adjusted. Then, it is possible to calculate a mean value and a variance of C features of each feature point in the feature obtained by dot-multiplication, subtract the mean value respectively from the values of the C features and then divide a result by the variance to obtain normalized C features of each feature point, so that the normalization of the feature of each feature point is completed. When the normalization is performed on all feature points in the feature map, a normalized feature map with a size of L^{∗}H^{∗}C may be obtained.

Similarly, as shown in FIG. 4, the weighted feature map 404 also has a size of L^{∗}H^{∗}C. By performing the aforementioned normalization on each feature point in the weighted feature map 404, a mean and variance 405 of C features of each feature point in the weighted feature map 404 may be obtained. Then the mean and variance of L^{∗}H feature points may form a mean graph with a size of L^{∗}H and a variance graph with a size of L^{∗}H. In the embodiment 400, the mean graph and the variance graph may be used as the feature statistical data. Then, it is possible to dot-multiply the feature with the size of L^{∗}H of each channel in the normalized feature map 403 with the mean graph, and add the feature of each channel in the feature map obtained by dot-multiplication to the mean graph to obtain a fused feature 406, so that the de-normalization of the normalized feature map 403 is completed. The feature statistical data obtained by the above method may retain the feature of each feature point, which facilitates a local fusion of the feature map.

It may be understood that the above principle of fusing the feature map is merely used as an example to facilitate understanding of the present disclosure. According to actual needs, any principle may be used to implement the fusion of the feature map, which is not limited in the present disclosure.

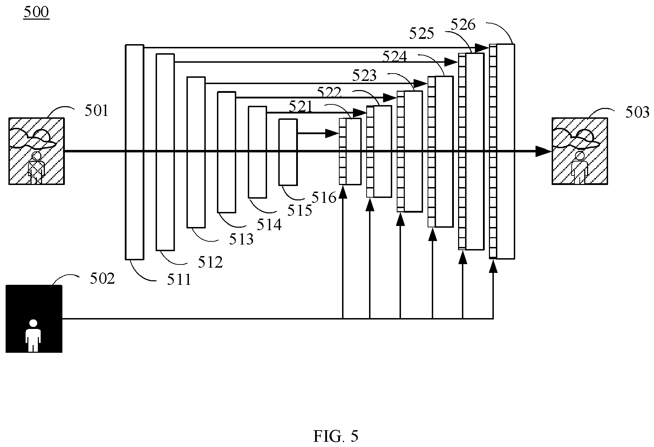

FIG. 5 shows a schematic diagram of a principle of a method of fusing an image according to embodiments of the present disclosure.

According to embodiments of the present disclosure, an original feature map may be taken into account when decoding the fused feature, so that the fused image obtained by decoding may retain details in the stitched image as much as possible, which may improve a resolution and a sense of reality of the fused image.

For example, when decoding, the feature map may be stitched with the fused feature, and then the stitched feature may be decoded to obtain the fused image.

According to embodiments of the present disclosure, when encoding the stitched image, for example, cascaded N-level encoding networks may be used to downsample the feature of the stitched image step by step, so as to sequentially extract feature maps of different receptive fields from the stitched image.

For example, as shown in FIG. 5, in an embodiment 500, the cascaded N-level encoding networks may include encoding network 511 to encoding network 516. When a stitched image 501 is input to a first-level encoding network 511 in the cascaded N-level encoding networks, an i^{th} feature map may be output from an i^{th}-level encoding network in the N-level encoding networks, so that a total of N feature maps may be extracted.

Accordingly, cascaded N-level decoding networks may be used when decoding the feature map. As shown in FIG 5, in the embodiment 500, the cascaded N-level decoding networks may include decoding network 521 to decoding network 526. In this embodiment, the i^{th} feature map may be input into an (N-i+1)^{th}-level decoding network in the cascaded N-level decoding networks, and obtain a fused image 503 according to a feature output by the N^{th}-level decoding network 526 in the N-level decoding networks.

According to embodiments of the present disclosure, as shown in FIG. 5, each level of decoding network may include a network for weighting and fusing the feature map (such as the filled part of each decoding network shown in FIG. 5). For example, taking the (N-i+1)^{th}-level decoding network as an example, each level of decoding network in the N-level decoding networks may include a weighting sub-network, a fusion sub-network, and a decoding sub-network. The weighting sub-network is used to perform a weighting on the i^{th} feature map output by the i^{th} encoding network, by using the attention mechanism, so as to obtain the weighted feature map. The fusion sub-network is used to perform a fusion on the i^{th} feature map according to the feature statistical data of the weighted feature map output from the weighted sub-network, so as to obtain the fused feature. The decoding sub-network is used to decode the fused feature output from the fusion sub-network. The data obtained by decoding and an (i+1)^{th} feature map may be simultaneously input into an (N-i)^{th}-level decoding network. By analogy, the feature output by the N^{th}-level decoding network may be processed by 1^{∗}1conv to obtain the fused image, where N is an integer greater than 1, and i=1, 2,..., N.

According to embodiments of the present disclosure, as shown in FIG. 5, in such embodiments, the mask image 502 for the foreground image is referred to when decoding the fused feature. Specifically, when the fusion sub-network in each level of decoding network performs a fusion on the feature, the feature map may be dot-multiplied with the mask image 502, and the feature obtained by dot-multiplication may be normalized. It should be noted that in order to facilitate operations such as dot-multiplication or addition between features, each level of decoding network may further include a convolutional layer or pooling layer for dimension reduction or dimension increase of features, so that two features to be dot-multiplied or added have the same height and width.

In embodiments of the present disclosure, the cascaded N-level encoding networks and the cascaded N-level decoding networks may form a network architecture similar to U-Net. The network architecture in such embodiments is different from U-Net in a related art in that each level of decoding network includes a weighting sub-network and a fusion sub-network, and the input of each level of decoding network further includes a mask image.

According to the method of fusing the image in such embodiments, end-to-end processing of image fusion may be achieved, and network training may be completed with less data, so that a fusion cost may be reduced on the basis of ensuring a fusion effect. At the same time, it may improve the user experience and user stickiness, and may be applied to various image fusion scenarios.

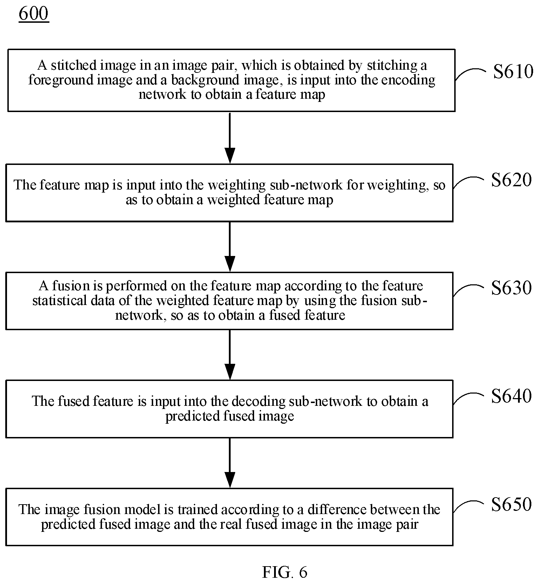

Based on the method of fusing the image provided by the present disclosure, the present disclosure further provides a method of training an image fusion model. The training method will be described in detail below with reference to FIG. 6.

FIG. 6 shows a flowchart of a method of training an image fusion model according to embodiments of the present disclosure.

As shown in FIG. 6, a method 600 of training an image fusion model in such embodiments may include operation S610 to operation S650. The image fusion model includes an encoding network and a decoding network, and the decoding network includes a weighting sub-network, a fusion sub-network and a decoding sub-network.

In operation S610, a stitched image in an image pair, which is obtained by stitching a foreground image and a background image, is input into the encoding network to obtain a feature map.

According to embodiments of the present disclosure, the image pair includes the stitched image and a real fused image. For example, the stitched image may be obtained by performing a color gamut transformation on an image of a target object in the real fused image. In operation S610, the encoding network may obtain the feature map by using a method similar to the method in operation S210 described above, which will not be repeated here.

In operation S620, the feature map is input into the weighting sub-network for weighting, so as to obtain a weighted feature map. For example, in operation S620, the weighting sub-network may obtain the weighted feature map by using a method similar to the method in operation S220 described above, which will not be repeated here.

In operation S630, a fusion is performed on the feature map according to the feature statistical data of the weighted feature map by using the fusion sub-network, so as to obtain a fused feature. For example, in operation S630, the fusion sub-network may obtain the fused feature by using a method similar to the method in operation S230 described above, which will not be repeated here.

In operation S640, the fused feature is input into the decoding sub-network to obtain a predicted fused image. For example, in operation S640, the decoding sub-network may obtain the fused image by using a method similar to the method in operation S240 described above, which will not be repeated here.

Operation S620 to operation S640 may be performed sequentially to decode the feature map and obtain the fused image.

In operation S650, the image fusion model is trained according to a difference between the predicted fused image and the real fused image in the image pair.

According to embodiments of the present disclosure, a value of a predetermined loss function may be calculated according to the difference between the predicted fused image and the real fused image, so as to obtain a loss of the image fusion model. Then, a network parameter in the image fusion model may be adjusted by using a back propagation algorithm, so as to minimize the loss of the model and train the image fusion model. The predetermined loss function may be set according to actual needs, for example, it may be L1 Loss function, which is not limited in the present disclosure.

In embodiments of the present disclosure, the aforementioned fusion sub-network may include, for example, a normalization layer and a de-normalization layer. Accordingly, when a fusion is performed on the feature map, the mask image for the foreground image and the feature map may be input into the normalization layer firstly, so that the normalization layer may perform a feature-point-based normalization on the feature map according to the mask image for the foreground image, so as to obtain the normalized feature map. It should be noted that when the cascaded N-level encoding networks and the cascaded N-level decoding networks are used, if the fusion sub-network belongs to the first-level decoding network, the feature map is an N^{th} feature map output by the N^{th}-level encoding network; if the fusion sub-network belongs to a j^{th}-level decoding network other than the first-level decoding network, the feature map may be obtained by adding an (N-j+1)^{th} feature map output by an (N-j+1)^{th}-level encoding network and a feature map output by a (j-1)^{th}-level decoding network, where j=2, 3,..., N. When the normalized feature map is obtained, the normalized feature map and the weighted feature map may be input into the de-normalization layer, so that the de-normalization layer may perform a de-normalization on the normalized feature map according to the feature statistical data of each feature point in the weighted feature map, so as to obtain the fused feature.

According to embodiments of the present disclosure, the encoding network includes cascaded N-level encoding networks, and the decoding network includes cascaded N-level decoding networks. Each level of decoding network in the N-level decoding networks may include a weighting sub-network, a fusion sub-network, and a decoding sub-network. The above-mentioned operation of inputting the stitched image obtained by stitching the foreground image and the background image in the image pair into the encoding network to obtain the feature map may include inputting the stitched image into the i^{th} encoding network in the N-level encoding networks to obtain the i^{th} feature map. When decoding the feature map to obtain the fused image, the i^{th} feature map may be input into the (N-i+1)^{th}-level decoding network in the cascaded N-level decoding networks to obtain the predicted fused image output by the N^{th}-level decoding network in the N-level decoding networks, where N is an integer greater than 1, and i=1, 2,..., N.

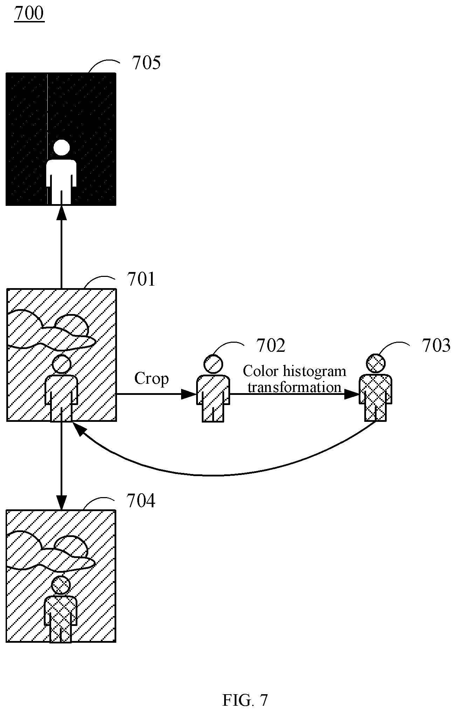

According to embodiments of the present disclosure, the method of training the image fusion model may further include, for example, an operation of generating an image pair as sample data. This operation will be described in detail below with reference to FIG. 7.

FIG. 7 shows a schematic diagram of a principle of obtaining an image pair as sample data according to embodiments of the present disclosure.

As shown in FIG. 7, in an embodiment 700, when obtaining an image pair as sample data, an image of a target region may be cropped from a predetermined image 701 to obtain an original foreground image 702. Then, a color histogram transformation is performed on the original foreground image 702 to obtain a transformed foreground image 703. Next, the image of the target region in the predetermined image 701 is replaced with the transformed foreground image 703 to obtain a stitched image 704. In this way, the predetermined image 701 may be used as a real fused image to form an image pair as sample data with the stitched image.

Exemplarily, the target region may be a region where the target object is located. In a case that a mask image needs to be considered when the image fusion is performed, as shown in FIG. 7, such embodiments may be implemented to generate a mask image 705 corresponding to the foreground image according to a position of the target region. Specifically, the mask image 705 may be obtained by assigning a white pixel value to a pixel value of each pixel point in the image of the target region, and assigning a black pixel value to a pixel value of each pixel point in other regions except the target region.

The predetermined image may be any image in a predetermined open source dataset. The predetermined open source dataset may be, for example, MS COCO (Microsoft Common Objects in Context). This dataset is a large and rich object detection and segmentation dataset. This dataset provides images of 80 categories of target objects, and provides mask images obtained by dividing the target objects. Because the mask images in the dataset are all manually labeled, a data quality may be guaranteed.

In such embodiments, by pasting the transformed foreground image back to the original predetermined image, it is possible to create an illusion of mixing two images. In such embodiments, the transformed foreground image is pasted back to the original predetermined image rather than to an unrelated image in order to keep a content structure of the original predetermined image as much as possible, so that the image fusion model only needs to learn how to fuse the background image and the foreground image without paying attention to whether the image content is damaged. In this way, a difficulty in training the image fusion model may be reduced to a certain extent.

In embodiments of the present disclosure, a plurality of different color histograms may be used to perform a color transformation on the original foreground image to obtain a plurality of transformed foreground images with different colors. The transformed foreground images with different colors may be respectively used to replace the image of the target region in the predetermined image, so as to obtain a plurality of stitched images. The plurality of stitched images may be respectively combined with the predetermined image to obtain a plurality of image pairs as sample data. In this way, richer sample data may be obtained, and an accuracy of the trained image fusion model may be improved.

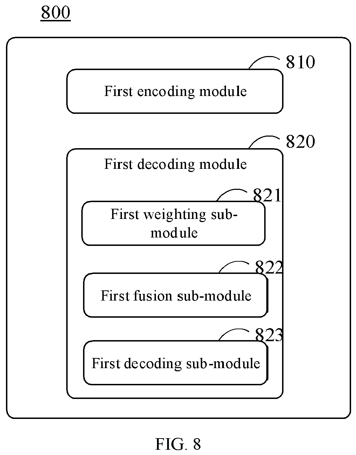

Based on the method of fusing the image provided by the present disclosure, the present disclosure further provides an apparatus of fusing an image. The apparatus will be described in detail below with reference to FIG. 8.

FIG. 8 shows a structural block diagram of an apparatus of fusing an image according to embodiments of the present disclosure.

As shown in FIG. 8, an apparatus 800 of fusing an image in such embodiments may include a first encoding module 810 and a first decoding module 820. The first decoding module 820 may include a first weighting sub-module 821, a first fusion sub-module 822, and a first decoding sub-module 823.

The first encoding module 810 may be used to encode a stitched image obtained by stitching a foreground image and a background image, so as to obtain a feature map. In embodiments of the present disclosure, the first encoding module 810 may be used to perform operation S210 described above, which will not be described in detail here.

The first decoding module 820 may be used to decode the feature map to obtain a fused image. Specifically, the first weighting sub-module 821 is used to perform a weighting on the feature map by using an attention mechanism, so as to obtain a weighted feature map. The first fusion sub-module 822 is used to perform a fusion on the feature map according to feature statistical data of the weighted feature map, so as to obtain a fused feature. The first decoding sub-module 823 is used to decode the fused feature to obtain the fused image. In embodiments of the present disclosure, the first weighting sub-module 821, the first fusion sub-module 822 and the first decoding sub-module 823 may be respectively used to perform operation S220 to operation S240 described above, which will not be described in detail here.

According to embodiments of the present disclosure, the first weighting sub-module 821 may include a pooling unit, a convolution unit, and a weighting unit. The pooling unit is used to perform a feature point-based pooling operation on the feature map to obtain a pooled feature. The convolution unit is used to perform a convolution operation on the pooled feature to obtain a weight map for the feature map. The weighting unit is used to perform a weighting on the feature map by using the weight map, so as to obtain the weighted feature map.

According to embodiments of the present disclosure, the pooling unit may include a first pooling sub-unit, a second pooling sub-unit, and a feature obtaining sub-unit. The first pooling sub-unit is used to perform a feature point-based max pooling operation on the feature map to obtain a first pooled feature. The second pooling sub-unit is used to perform a feature point-based average pooling operation on the feature map to obtain a second pooled feature. The feature obtaining sub-unit is used to obtain the pooled feature according to the first pooled feature and the second pooled feature.

According to embodiments of the present disclosure, the convolution unit is further used to perform the convolution operation on the pooled feature by using a convolutional neural network having a convolution kernel larger than a predetermined size, so as to obtain the weight map for the feature map.

According to embodiments of the present disclosure, the first fusion sub-module may include a first normalization unit and a first de-normalization unit. The first normalization unit is used to perform a feature point-based normalization on the feature map according to a mask image for the foreground image, so as to obtain a normalized feature map. The first de-normalization unit is used to perform a de-normalization on the normalized feature map according to the feature statistical data of each feature point in the weighted feature map, so as to obtain the fused feature.

According to embodiments of the present disclosure, the first decoding sub-module is further used to decode a stitched feature obtained by stitching the feature map and the fused feature, so as to obtain the fused image.

According to embodiments of the present disclosure, the first encoding module 810 may be specifically used to input the stitched image into a first-level encoding network in cascaded N-level encoding networks, so as to obtain an i^{th} feature map output by an i^{th}-level encoding network in the N-level encoding networks. The first decoding module 820 may be specifically used to input the i^{th} feature map into an (N-i+1)^{th}-level decoding network in cascaded N-level decoding networks, so as to obtain a fused image according to an output of an N^{th}-level decoding network in the N-level decoding networks. The (N-i+1)^{th}-level decoding network includes a weighting sub-network, a fusion sub-network, a decoding sub-network. The weighting sub-network is used to perform a weighting on the i^{th} feature map by using the attention mechanism. The fusion sub-network is used to perform a fusion on the i^{th} feature map. The decoding sub-network is used to decode a fused feature output by the fusion sub-network. N is an integer greater than 1, and i=1, 2,..., N.

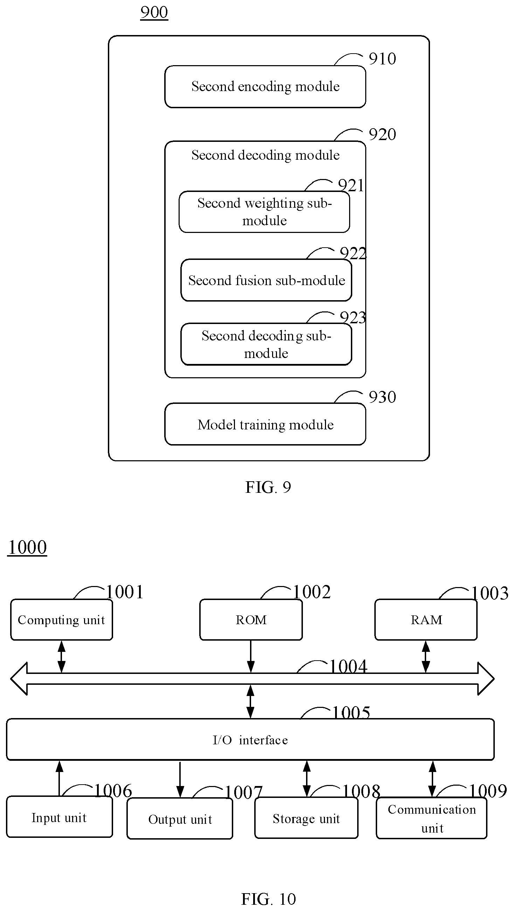

Based on the method of training the image fusion model provided by the present disclosure, the present disclosure further provides an apparatus of training an image fusion model. The apparatus will be described in detail below with reference to FIG. 9.

FIG. 9 shows a structural block diagram of an apparatus of training an image fusion model according to embodiments of the present disclosure.

As shown in FIG. 9, an apparatus 900 of training an image fusion model in such embodiments may include a second encoding module 910, a second decoding module 920, and a model training module 930. The second decoding module 920 may include a second weighting sub-module 921, a second fusion sub-module 922, and a second decoding sub-module 923. The image fusion model may include an encoding network and a decoding network, and the decoding network may include a weighting sub-network, a fusion sub-network, and a decoding sub-network.

The second encoding module 910 may be used to input a stitched image obtained by stitching a foreground image and a background image in an image pair into the encoding network to obtain a feature map. In embodiments of the present disclosure, the second encoding module 910 may be used to perform operation S610 described above, which will not be described in detail here.

The second decoding module 920 may be used to decode the feature map to obtain a predicted fused image. Specifically, the second weighting sub-module 921 is used to input the feature map into the weighting sub-network to perform a weighting, so as to obtain a weighted feature map; the second fusion sub-module 922 is used to perform a fusion on the feature map by using the fusion sub-network according to feature statistical data of the weighted feature map, so as to obtain a fused feature; and the second decoding sub-module 923 is used to input the fused feature into the decoding sub-network to obtain the predicted fused image. In embodiments of the present disclosure, the second weighting sub-module 921, the second fusion sub-module 922 and the second decoding sub-module 923 may be respectively used to perform operation S620 to operation S640 described above, which will not be described in detail here.

The model training module 930 may be used to train the image fusion model according to a difference between the predicted fused image and a real fused image in the image pair. In embodiments of the present disclosure, the model training module 930 may be used to perform operation S650 described above, which will not be described in detail here.

According to embodiments of the present disclosure, the fusion sub-network may include a normalization layer and a de-normalization layer, and the second fusion sub-module 922 may include a second normalization unit and a second de-normalization unit. The second normalization unit is used to input a mask image for the foreground image and the feature map into the normalization layer, so that the normalization layer performs a feature point-based normalization on the feature map according to the mask image for the foreground image, so as to obtain a normalized feature map. The second de-normalization unit is used to input the normalized feature map and the weighted feature map into the de-normalization layer, so that the de-normalization layer performs a de-normalization on the normalized feature map according to the feature statistical data of each feature point in the weighted feature map, so as to obtain the fused feature.

According to embodiments of the present disclosure, the encoding network includes cascaded N-level encoding networks, the decoding network includes cascaded N-level decoding networks, and each level of decoding network in the N-level decoding networks includes the weighting sub-network, the fusion sub-network, and the decoding sub-network. The second encoding module 910 may be further used to input the stitched image into an i^{th}-level encoding network in the N-level encoding networks to obtain an i^{th} feature map. The second decoding module 920 may be further used to input the i^{th} feature map into an (N-i+1)^{th}-level decoding network in the cascaded N-level decoding networks to obtain a predicted fused image according to an output of an Nth-level decoding network in the N-level decoding networks. N is an integer greater than 1, and i=1, 2,..., N. The (N-i+1)^{th}-level decoding network includes the weighting sub-network, the fusion sub-network, and the decoding sub-network.

According to embodiments of the present disclosure, the apparatus 900 of training the image fusion model may further include a cropping module, a transformation module, a stitching module, and an image pair forming module. The cropping module is used to crop an image in a target region from a predetermined image, so as to obtain an original foreground image. The transformation module is used to perform a color histogram transformation on the original foreground image, so as to obtain a transformed foreground image. The stitching module is used to replace the image in the target region in the predetermined image with the transformed foreground image, so as to obtain a stitched image. The image pair forming module configured to form the image pair comprising the real fused image and the stitched image, by using the predetermined image as the real fused image.

It should be noted that in the technical solution of the present disclosure, an acquisition, a collection, a storage, a use, a processing, a transmission, a provision and a disclosure of user personal information involved comply with provisions of relevant laws and regulations, and do not violate public order and good custom.

According to embodiments of the present disclosure, the present disclosure further provides an electronic device, a readable storage medium, and a computer program product.

FIG. 10 shows a schematic block diagram of an exemplary electronic device 1000 for implementing the method of fusing the image and/or the method of training the image fusion model provided by embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the electronic device 1000 includes a computing unit 1001 which may perform various appropriate actions and processes according to a computer program stored in a read only memory (ROM) 1002 or a computer program loaded from a storage unit 1008 into a random access memory (RAM) 1003. In the RAM 1003, various programs and data necessary for an operation of the electronic device 1000 may also be stored. The computing unit 1001, the ROM 1002 and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, such as a keyboard, or a mouse; an output unit 1007, such as displays or speakers of various types; a storage unit 1008, such as a disk, or an optical disc; and a communication unit 1009, such as a network card, a modem, or a wireless communication transceiver. The communication unit 1009 allows the electronic device 1000 to exchange information/data with other devices through a computer network such as Internet and/or various telecommunication networks.

The computing unit 1001 may be various general-purpose and/or dedicated processing assemblies having processing and computing capabilities. Some examples of the computing unit 1001 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1001 executes various methods and processes described above, such as the method of fusing the image and/or the method of training the image fusion model. For example, in some embodiments, the method of fusing the image and/or the method of training the image fusion model may be implemented as a computer software program which is tangibly embodied in a machine-readable medium, such as the storage unit 1008. In some embodiments, the computer program may be partially or entirely loaded and/or installed in the electronic device 1000 via the ROM 1002 and/or the communication unit 1009. The computer program, when loaded in the RAM 1003 and executed by the computing unit 1001, may execute one or more steps in the method of fusing the image and/or the method of training the image fusion model. Alternatively, in other embodiments, the computing unit 1001 may be used to perform the method of fusing the image and/or the method of training the image fusion model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system or a server combined with a block-chain.

It should be understood that steps of the processes illustrated above may be reordered, added or deleted in various manners. For example, the steps described in the present disclosure may be performed in parallel, in sequence, or in a different order, as long as a desired result for the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of fusing an image, comprising:
encoding (S210) a stitched image obtained by stitching a foreground image and a background image, so as to obtain a feature map; and
decoding the feature map to obtain a fused image, wherein the feature map is decoded by:
performing (S220) a weighting on the feature map by using an attention mechanism, so as to obtain a weighted feature map;
performing (S230) a fusion on the feature map according to feature statistical data of the weighted feature map, so as to obtain a fused feature; and
decoding (S240) the fused feature to obtain the fused image.

2. The method according to claim 1, wherein the performing a weighting on the feature map by using an attention mechanism, so as to obtain a weighted feature map comprises:
performing a feature point-based pooling operation on the feature map to obtain a pooled feature;
performing a convolution operation on the pooled feature to obtain a weight map for the feature map; and
performing a weighting on the feature map by using the weight map, so as to obtain the weighted feature map.

3. The method according to claim 2, wherein the performing a feature point-based pooling operation on the feature map to obtain a pooled feature comprises:
performing a feature point-based max pooling operation on the feature map to obtain a first pooled feature;
performing a feature point-based average pooling operation on the feature map to obtain a second pooled feature; and
obtaining the pooled feature according to the first pooled feature and the second pooled feature.

4. The method according to claim 2, wherein the performing a convolution operation on the pooled feature to obtain a weight map for the feature map comprises:
performing the convolution operation on the pooled feature by using a convolutional neural network having a convolution kernel larger than a predetermined size, so as to obtain the weight map for the feature map.

5. The method according to claim 1, wherein the performing a fusion on the feature map according to feature statistical data of the weighted feature map comprises:
performing a feature point-based normalization on the feature map according to a mask image for the foreground image, so as to obtain a normalized feature map; and
performing a de-normalization on the normalized feature map according to the feature statistical data of each feature point in the weighted feature map, so as to obtain the fused feature.

6. The method according to claim 1, wherein the decoding the fused feature to obtain the fused image comprises:
decoding a stitched feature obtained by stitching the feature map and the fused feature, so as to obtain the fused image.

7. The method according to claim 1, wherein:
the encoding a stitched image obtained by stitching a foreground image and a background image, so as to obtain a feature map comprises: inputting the stitched image into a first-level encoding network in cascaded N-level encoding networks, so as to obtain an i^{th} feature map output by an i^{th}-level encoding network in the N-level encoding networks; and
the decoding the feature map to obtain a fused image further comprises: inputting the i^{th} feature map into an (N-i+1)^{th}-level decoding network in cascaded N-level decoding networks, so as to obtain a fused image according to an output of an N^{th}-level decoding network in the N-level decoding networks,
wherein the (N-i+1)^{th}-level decoding network comprises:
a weighting sub-network configured to perform a weighting on the i^{th} feature map by using the attention mechanism;
a fusion sub-network configured to perform a fusion on the i^{th} feature map; and
a decoding sub-network configured to decode a fused feature output by the fusion sub-network,
where N is an integer greater than 1, and i=1, 2,..., N.

8. A method (600) of training an image fusion model, wherein the image fusion model comprises an encoding network and a decoding network, and the decoding network comprises a weighting sub-network, a fusion sub-network, and a decoding sub-network; the method comprises:
inputting (S610) a stitched image in an image pair into the encoding network to obtain a feature map, wherein the stitched image is obtained by stitching a foreground image and a background image;
decoding the feature map to obtain a predicted fused image, wherein the feature map is decoded by:
inputting (S620) the feature map into the weighting sub-network to perform a weighting, so as to obtain a weighted feature map;
performing (S630) a fusion on the feature map by using the fusion sub-network according to feature statistical data of the weighted feature map, so as to obtain a fused feature; and
inputting (S640) the fused feature into the decoding sub-network to obtain the predicted fused image; and
training (S650) the image fusion model according to a difference between the predicted fused image and a real fused image in the image pair.

9. The method according to claim 8, wherein the fusion sub-network comprises a normalization layer and a de-normalization layer; the performing a fusion on the feature map by using the fusion sub-network, so as to obtain a fused feature comprises:
inputting a mask image for the foreground image and the feature map into the normalization layer, so that the normalization layer performs a feature point-based normalization on the feature map according to the mask image for the foreground image, so as to obtain a normalized feature map; and
inputting the normalized feature map and the weighted feature map into the de-normalization layer, so that the de-normalization layer performs a de-normalization on the normalized feature map according to the feature statistical data of each feature point in the weighted feature map, so as to obtain the fused feature.

10. The method according to claim 8, wherein the encoding network comprises cascaded N-level encoding networks, the decoding network comprises cascaded N-level decoding networks, and each level of decoding network in the N-level decoding networks comprises the weighting sub-network, the fusion sub-network, and the decoding sub-network;
the inputting a stitched image in an image pair into the encoding network to obtain a feature map, wherein the stitched image is obtained by stitching a foreground image and a background image comprises: inputting the stitched image into an i^{th}-level encoding network in the N-level encoding networks to obtain an i^{th} feature map; and
the decoding the feature map to obtain a fused image further comprises: inputting the i^{th} feature map into an (N-i+1)^{th}-level decoding network in the cascaded N-level decoding networks to obtain a predicted fused image according to an output of an N^{th}-level decoding network in the N-level decoding networks,
where N is an integer greater than 1, and i=1, 2,..., N; the (N-i+1)^{th}-level decoding network comprises the weighting sub-network, the fusion sub-network, and the decoding sub-network.

11. The method according to claim 8, further comprising:
cropping an image in a target region from a predetermined image, so as to obtain an original foreground image;
performing a color histogram transformation on the original foreground image, so as to obtain a transformed foreground image;
replacing the image in the target region in the predetermined image with the transformed foreground image, so as to obtain a stitched image; and
forming the image pair comprising the real fused image and the stitched image, by using the predetermined image as the real fused image.

12. An apparatus (800) of fusing an image, comprising:
a first encoding module (810) configured to encode a stitched image obtained by stitching a foreground image and a background image, so as to obtain a feature map; and
a first decoding module (820) configured to decode the feature map to obtain a fused image, wherein the first decoding module comprises:
a first weighting sub-module (821) configured to perform a weighting on the feature map by using an attention mechanism, so as to obtain a weighted feature map;
a first fusion sub-module (822) configured to perform a fusion on the feature map according to feature statistical data of the weighted feature map, so as to obtain a fused feature; and
a first decoding sub-module (823) configured to decode the fused feature to obtain the fused image.

13. An electronic device, comprising:
at least one processor; and
a memory communicatively connected to the at least one processor, wherein the memory stores instructions executable by the at least one processor, and the instructions, when executed by the at least one processor, cause the at least one processor to implement the method according to any one of claims 1 to 11.

14. A non-transitory computer-readable storage medium having computer instructions therein, wherein the computer instructions are configured to cause a computer to implement the method according to any one of claims 1 to 11.

15. A computer program product containing a computer program, wherein the computer program, when executed by a processor, causes the processor to implement the method according to any one of claims 1 to 11.
